# FASCICULE DE BREVET EUROPEEN

(11) **EP 4 297 422 B1**
(45) Date de publication et mention de la délivrance du brevet: **16.10.2024**
(21) Numéro de dépôt: 23180811.4
(22) Date de dépôt: 22.06.2023
(51) Int. Cl.: H04Q 1/02

(54) **DISPOSITIF DE FIXATION AMOVIBLE DE PANNEAU POUR BAIE DE BRASSAGE**
LÖSBARE PLATTENBEFESTIGUNGSVORRICHTUNG FÜR EIN GRILLGESTELL
DEVICE FOR REMOVABLY ATTACHING A PANEL TO A BREWING BAY

(30) Priorité: 23.06.2022 FR 2206223
(43) Date de publication de la demande: 27.12.2023
(73) Titulaire: Cae Data, 91320 Wissous (FR)
(72) Inventeur: CRESPIN, Adil, 91120 Palaiseau (FR)
(74) Mandataire: Axe PI

(56) Documents cités:
- WO-A1-2013/107679
- CN-A- 111 864 487

## Description

### DOMAINE TECHNIQUE DE L'INVENTION

La présente invention entre dans le domaine de l'informatique et des télécommunications, en particulier le domaine des structures supports de moyens de communication, préférentiellement téléphonique et informatique.

Dans ce contexte, la connexion à un réseau de téléphonie et informatique fait intervenir une armoire technique, regroupant différents appareils à relier au(x) réseau(x) concerné(s). En fonction de sa structure et de sa taille, une telle armoire technique est communément dénommée « baie de brassage », « coffret de communication », ou bien « armoire de brassage » ou « baie informatique », ou encore « armoire réseau ».

Au sens de la présente invention, le terme « baie de brassage» englobe les différentes définitions susnommées.

Actuellement, une baie de brassage comprend une structure, dont le volume intérieur définit une enceinte, fermée ou ouverte, au sein de laquelle sont rapportés en fixation différents appareils, à relier entre eux et à différents réseaux, comme le réseau d'approvisionnement en électricité, le réseau de communication téléphonique, ou encore un réseau informatique. Ladite structure présente une forme globalement parallélépipédique rectangle, pourvue de montants verticaux parallèles entre eux, reliés par des traverses au moins aux niveaux des extrémités distales desdits montants verticaux, supérieurement et inférieurement. Des parois peuvent refermer cette structure, avec éventuellement une porte en façade.

Plus avant, les montants verticaux situés en face avant présentent au moins en façade, sur toute ou partie de leur longueur, des orifices ménagés traversants et standardisés. De tels orifices sont espacés régulièrement et présentent une section carrée ou rectangulaire. Ils permettent de rapporter en fixation sur la structure un ou plusieurs panneaux, destinés à servir de support aux différents appareils, par exemple un routeur de communication téléphonique ou informatique, un pare-feu, ou encore un clavier déployable, ou bien une simple plaque recevant un appareil posé en face supérieure. Un tel panneau sert donc d'étagère, conférant sa dénomination usuelle de « rack ».

Plus précisément, ledit panneau est dimensionné complémentairement à la structure, en particulier aux distances entre les montants verticaux. En outre, le panneau comprend en façade, à chaque extrémité latérale, une patte de fixation pourvue de trous traversants, similaires aux orifices des montants de la structure de la baie de brassage au sein de laquelle ledit panneau doit être rapporté en fixation.

A ce titre, usuellement, la fixation s'effectue par vissage au travers des trous et des orifices, positionnés en alignement, de vis à collet carré coopérant avec des écrous correspondants. Généralement, pour la fixation de chaque patte à chacune des extrémités du panneau, la vis est positionnée en façade, tandis que l'écrou est vissé par derrière, le collet carré sous la tête de ladite vis pénétrant au travers du trou, et éventuellement de l'orifice, faisant office de trompeur et de verrouillage angulaire de ladite vis.

On comprend aisément le caractère durable d'une telle fixation et le temps nécessaire pour le montage, et inversement pour le démontage du panneau requis régulièrement pour intervenir sur les appareils supportés.

De surcroît, le montage est complexe et fastidieux, nécessitant de maintenir le panneau pendant le positionnement de la vis et de l'écrou au travers du trou et de l'orifice de chaque patte.

### ETAT DE LA TECHNIQUE

Pour faciliter l'accès auxdits appareils, il a été imaginé de rendre déployables certains appareils par rapport audit panneau. Ce déploiement s'effectue par l'intermédiaire d'un tiroir, monté en coulissement par rapport audit panneau vers la façade, depuis une position rétractée à l'intérieur de l'enceinte de la structure vers une position déployée hors de l'enceinte, et inversement.

Toutefois, un tel tiroir présente un encombrement, du fait de ses organes dédiés au coulissement, qui diminue le volume alloué à l'appareil qu'il peut recevoir. De plus, la fixation par vissage du panneau présente les mêmes inconvénients.

Pour faciliter l'accès, avec un montage et un démontage rapides du panneau sur les montants verticaux de la structure, la fixation des pattes latérales a été prévue amovible.

Une solution existante consiste en une fixation par encliquetage au moyen de paires de redents, montés depuis une position rapprochée sous contrainte en pliage, en retour élastique vers une position en écartement, en raison de la résilience du matériau constituant lesdits redents. Ainsi, lors de l'insertion au travers d'un trou et d'un orifice, les redents sont contraints, se pliant contre les chants internes dudit trou et dudit orifice lors de leur passage, pour revenir en position initiale en écartement, faisant butée de part et d'autre dudit orifice en appui contre la paroi arrière du montant vertical correspondant.

Si l'insertion est facilitée pour le montage, le démontage est complexe et nécessite de pincer les redents par l'arrière, tout en opérant une traction vers l'avant dudit panneau. En outre, le matériau employé pour les redents, souvent un matériau plastique conférant la résilience requise, est susceptible de se détériorer lors d'insertions successives et régulières, ainsi qu'au fil du temps.

Une alternative connue consiste en une fixation par crochetage, au moyen de deux crochets, dimensionnés pour coopérer en insertion au sein de deux orifices d'un montant vertical de la structure de la baie de brassage. De plus les deux crochets sont montés mobiles en translation depuis une position rétractée vers une position déployée, et inversement. En position déployée, les crochets viennent verrouiller le panneau sur la structure, tandis qu'en position rétractée, le panneau peut être retiré. Un tel crochetage facilite grandement les opérations de montage et démontage d'un panneau.

Une solution similaire est décrite dans le document EP2558734, visant un assemblage mécanique comprenant deux organes de liaison, montés mobiles en coulissement l'un par rapport à l'autre, depuis une position écartée vers une position rapprochée, et inversement. En outre, un retour élastique vers la position écartée s'effectue par l'intermédiaire d'un ressort de compression monté entre lesdits organes.

De plus, chaque organe comprend une extrémité pourvue en face avant d'une oreille de préhension et une extrémité opposée distale pourvue en face arrière d'un crochet, de forme globalement triangulaire. Les deux crochets sont tournés l'un vers l'autre et les organes présentent une zone de croisement, de sorte que l'appui par pincement manuel en rapprochement sur les deux oreilles de préhension, applique un mouvement d'écartement des crochets l'un par rapport à l'autre, permettant de libérer l'assemblage lors du démontage.

Si une telle solution facilite les étapes de montage et de démontage, particulièrement adaptée pour un changement ou remplacement de panneau, elle n'offre pas entière satisfaction, surtout concernant le maintien du panneau lors de ces étapes.

En effet, comme évoqué précédemment, sans nécessiter de démontage, l'accès aux appareils supportés par le panneau s'effectue par un tiroir coulissant au moyen de glissières encombrantes.

Une solution à ce problème de mobilité, depuis une position rétractée vers une position déployée, et inversement, est envisagée en s'affranchissant desdites glissières. Pour ce faire, comme décrit dans le document EP3351009, le tiroir est équipé en face arrière d'un lien de retenue avec le panneau, de sorte que ledit tiroir puisse être extrait entièrement dudit panneau, mais maintenu. Plus précisément, le lien est fixé à une extrémité à la face arrière du tiroir, tandis que son extrémité opposée comprend une butée. Le lien traverse une ouverture ménagée dans le panneau, à l'arrière, coulissant lors de l'extraction dudit tiroir, jusqu'à ce que ladite butée vienne en appui contre les parois autour de ladite ouverture. Une action manuelle volontaire est alors nécessaire pour désengager le tiroir et le retirer complètement.

En outre, le lien est prévu flexible, souple pour pouvoir mouvoir à sa guise le tiroir une fois extrait. Cette flexibilité assure aussi le pliage de la butée, lors de sa première insertion au travers de l'ouverture.

Toutefois, une telle solution rend précaire le maintien du tiroir au sein du panneau en position rétractée, ainsi qu'en position extraite, dans laquelle le lien flexible subit des contraintes de torsion, traction et pliage, augmentant son usure au fil du temps. En cas de rupture, les appareils supportés risquent de tomber et se détériorer, en particulier concernant du matériel fragile et à manipuleravec précaution, comme c'est le cas dans les domaines de la communication et de l'informatique.

Enfin, on connaît également le document WO2013107679 qui divulgue un dispositif-support employé pour le câblage d'un bandeau de brassage dans une baie de brassage, ladite baie de brassage comportant un premier montant de fixation et un deuxième montant de fixation parallèles dotés chacun de plusieurs emplacements de fixation échelonnés suivant leur longueur, ledit dispositif comprenant un premier organe de support destiné à être fixé sur le premier montant de fixation et un deuxième organe de support destiné à être fixé sur le deuxième montant de fixation, chaque organe de support comportant au moins une surface d'appui contre laquelle peut venir s'appuyer le bandeau de brassage, et des moyens de blocage destinés à coopérer avec le bandeau de brassage pour caler le bandeau de brassage dans le plan défini par les surfaces d'appui.

### EXPOSE DE L'INVENTION

L'invention a pour but de pallier les inconvénients de l'état de la technique en proposant un dispositif de fixation amovible de panneau pour baie de brassage, comprenant des moyens de fixations sur la structure de ladite baie de brassage, au travers des orifices desdits montants verticaux. De surcroît, le dispositif de fixation prévoit une retenue des moyens de fixation dans la position déployée, lesdits moyens de retenue coopérant aussi avec lesdits orifices. Un tel dispositif permet notamment d'améliorer les opérations de maintenance.

Pour ce faire, l'invention a pour objet un dispositif de fixation amovible comprenant
- un corps pourvu en face arrière de moyens de fixation prévue amovible ;
- lesdits moyens de fixation comprenant deux crochets, lesdits crochets étant conformés et dimensionnés complémentairement pour coopérer en insertion et en extraction au sein de trous traversants ménagés au sein dudit panneau et d'orifices ménagés au travers d'un montant vertical d'une structure de ladite baie de brassage ;
- lesdits crochets étant montés mobiles depuis une position écartée vers une position rapprochée, et inversement ;

i) en position rapprochée (ou en position écartée), lesdits crochets assurent le maintien en fixation dudit panneau sur ledit montant vertical de ladite baie de brassage ;
ii) tandis qu'en position écartée (ou réciproquement en position rapprochée), lesdits crochets assurent l'insertion et l'extraction dudit dispositif par rapport audit montant vertical ;
iii) le retour depuis la position rapprochée vers la position écartée (ou réciproquement inversement) s'effectuant par des moyens de rappel élastique,
caractérisé en ce que
lesdits moyens de fixation comprennent
- des moyens de retenue pourvus d'au moins une languette, s'étendant depuis la face arrière jusqu'à une extrémité distale pourvue d'au moins une encoche formant butée contre ledit montant vertical ;
- ladite languette étant conformée et dimensionnée pour coopérer en coulissement au travers d'un desdits trous et d'un desdits orifices.

Selon des caractéristiques additionnelles, non limitatives, un tel dispositif de fixation peut comprendre lesdits moyens de retenue comprennent deux languettes parallèles.

Selon un mode de réalisation, ledit corps comprend une base et des moyens de préhension rapportés mobiles en coulissement sur ladite base, depuis une position repliée vers une position déployée, et inversement ; lesdits moyens de préhension coopérant avec lesdits moyens de fixation pour l'actionnement manuel de la mobilité des crochets depuis la position rapprochée (ou réciproquement la position écartée) vers la position écartée (ou réciproquement la position rapprochée).

Selon un mode de réalisation, lesdits moyens de préhension comprenant des moyens de verrouillage orientés vers ladite face arrière ;
j) en position repliée, lesdits moyens de verrouillage assurent parappui le blocage desdits crochets en position rapprochée (ou réciproquement en position écartée), pour le maintien en fixation dudit panneau sur ledit montant vertical ;
jj) en position déployée, lesdits moyens de verrouillage autorisant le retour des crochets vers la position écartée (ou réciproquement rapprochée), pour l'insertion et l'extraction dudit panneau par rapport au montant vertical de ladite baie de brassage.

Selon un mode de réalisation, lesdits moyens de verrouillage comprennent des moyens d'arrêt par clipsage desdits moyens de préhension en position déployée sur ladite base.

Selon un mode de réalisation, les moyens de préhension comprennent latéralement des boutons de déverrouillage par pression et traction desdits moyens de préhension par rapport à ladite base ; lesdits boutons comprenant des ergots coopérant en encliquetage avec des réceptacles ménagés au sein de ladite base de façon complémentaire.

Selon un mode de réalisation, ladite au moins une languette est amovible, rapportée en insertion au travers de ladite base.

Selon un mode de réalisation, ladite au moins une languette est solidaire desdits crochets.

L'invention a également pour objet un panneau pour baie de brassage comprenant
- en façade, à chaque extrémité, une patte de fixation ;
- ladite patte de fixation comprenant
   k) deux trous traversants espacés verticalement ;
   kk) au moins une ouverture située entre lesdits deux trous ;
   ledit panneau étant équipé, à chaque extrémité, d'un dispositif de fixation amovible selon l'invention ;
- lesdits crochets des moyens de fixation traversants lesdits trous ;
- ladite au moins une languette des moyens de retenue traversant ladite au moins une ouverture.

Selon des caractéristiques additionnelles, non limitatives, ladite patte de fixation comprend deux ouvertures contiguës sur la largeur de ladite patte, lesdites deux ouvertures étant conformées verticalement et complémentairement pour autoriser le libre passage desdites deux languettes du dispositif selon le mode de réalisation correspondant.

L'invention a encore pour objet une baie de brassage comprenant
- une structure pourvue en façade d'au moins deux montants verticaux, lesdits montants comprenant plusieurs orifices répartis régulièrement le long de la hauteur desdits montants ;
- rapporté en fixation amovible, au moins un panneau selon l'invention.

### PRESENTATION DES DESSINS

D'autres caractéristiques et avantages de l'invention ressortiront de la description détaillée qui va suivre des modes de réalisation non limitatifs de l'invention, en référence aux figures annexées, dans lesquelles :
La Figure 1 représente schématiquement une vue en perspective d'un mode de réalisation d'un panneau de brassage, prévu pour le raccordement d'un câblage réseau, montrant notamment deux dispositifs de fixation amovible rapportés à chaque patte d'extrémité dudit panneau.
La Figure 2 représente schématiquement de façon simplifiée une vue éclatée de la figure 1, montrant notamment les deux dispositifs de fixation amovible et leur moyen de retenue.
La Figure 3 représente schématiquement une vue en perspective d'un détail de deux panneaux montés sur un des montants verticaux de la structure d'une baie de brassage, au moyen de leur dispositif respectif de fixation amovible, montrant notamment un premier panneau en position rétractée, tandis qu'un deuxième panneau est en position déployée.
La Figure 4 représente schématiquement une vue en perspective de trois-quart avant d'un mode de réalisation d'un dispositif de fixation seul, montrant notamment la mobilité en translation des moyens de préhension par rapport à la base dudit corps, lesdits moyens de préhension se trouvant en position déployée.
La Figure 5 représente schématiquement une vue en perspective de trois-quart arrière de la figure 4, montrant notamment les crochets des moyens de retenue et les moyens de préhension en position déployée par rapport à ladite base.
La Figure 6 représente schématiquement une vue en perspective éclatée d'un mode de réalisation dudit dispositif de fixation amovible, montrant notamment l'agencement par insertion des moyens de préhension et des moyens de retenue par rapport à la base dudit corps.
La Figure 7 représente schématiquement une vue simplifiée en coupe verticale d'un mode de réalisation d'un dispositif de fixation amovible, en position déployée des moyens de préhension, bloqués contre les moyens d'arrêt, montrant notamment les crochets en position écartée, permettant l'insertion et l'extraction du panneau équipé du dispositif par rapport à un montant vertical d'une baie de brassage.
La Figure 8 représente schématiquement une vue similaire à la figure 7, montrant le verrouillage en position repliée des moyens de préhension, dont les moyens de verrouillage viennent en appui sur les crochets assurant la fixation du panneau solidaire du dispositif sur ledit montant vertical.

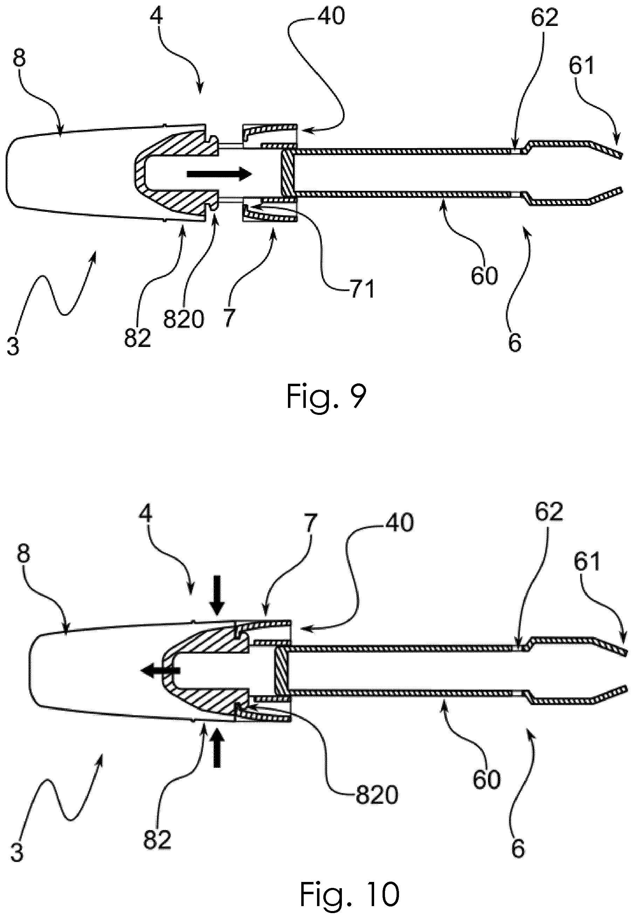

La Figure 9 représente schématiquement une vue simplifiée en coupe horizontale d'un mode de réalisation d'un dispositif de fixation amovible, avec les moyens de préhension en position déployée.
La Figure 10 représente schématiquement une vue similaire à la figure 9, avec les moyens de préhension en position repliée, montrant notamment le clipsage des ergots dans le réceptacle de la base, et mettant en exergue l'appui sur les boutons latéraux pour libérer le clipsage et autoriser le passage vers la position déployée.

### DESCRIPTION DETAILLEE

La présente invention concerne la fixation de panneau°1 sur une baie de brassage, dans le domaine de l'informatique et des télécommunications.

Comme évoqué précédemment, une baie de brassage est une armoire technique, encore dénommée « coffret de communication», ou bien « armoire de brassage » ou « baie informatique », ou encore « armoire réseau », ci-après désignée « baie » ou « baie de brassage ».

Une telle baie de brassage comprend une structure, dont le volume intérieur définit une enceinte, fermée ou ouverte, au sein de laquelle sont rapportés en fixation différents appareils, à relier entre eux et à différents réseaux, comme le réseau d'approvisionnement en électricité, le réseau de communication téléphonique, ou encore un réseau informatique. Ladite structure présente une forme globalement parallélépipédique rectangle, pourvue de montants°2 verticaux parallèles entre eux, reliés supérieurement et inférieurement à un bâti. Des parois peuvent refermer cette structure, avec éventuellement une porte en façade.

Plus avant, au moins les montants°2 verticaux situés en face avant présentent au moins en façade, sur toute ou partie de leur longueur, des orifices°20 ménagés traversants et standardisés. De tels orifices°20 sont espacés régulièrement et présentent une section carrée ou rectangulaire. Ils permettent de rapporter en fixation sur la structure un ou plusieurs panneaux°1.

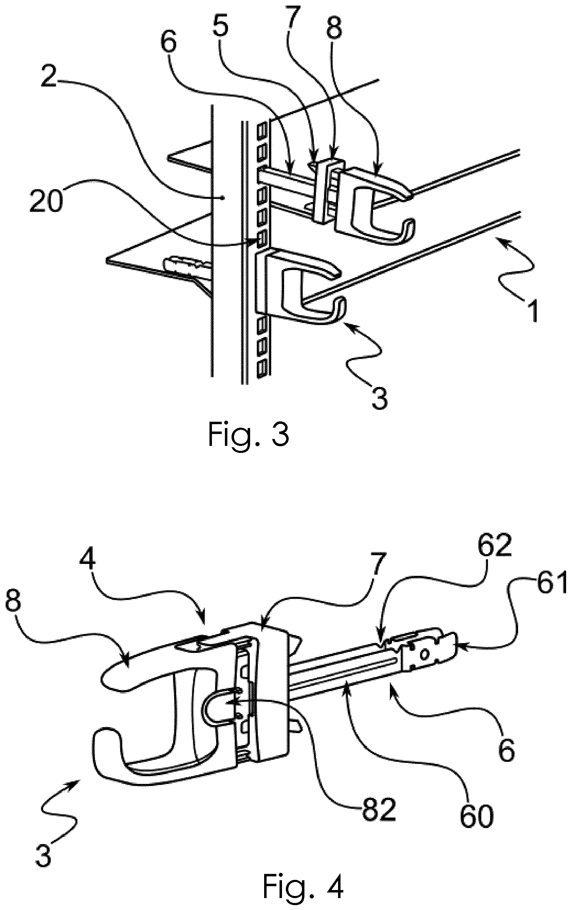

Un exemple d'un montant°2 vertical, situé à gauche de la baie, est visible sur la figure 3, montrant notamment les orifices°20 de section carrés, ménagés régulièrement le long de la hauteur dudit montant°2.

A ce titre, un panneau°1 est destiné à servir de support aux différents appareils et composants, par exemple un routeur de communication téléphonique ou informatique, un pare-feu, ou encore un clavier déployable, ou bien une simple plaque recevant un appareil posé en face supérieure. Un tel panneau°1 sert donc d'étagère, conférant sa dénomination usuelle de « rack ». Un tel rack est généralement normalisé, avec une longueur standard sur la largeur entre les montants°2 verticaux de la baie de brassage.

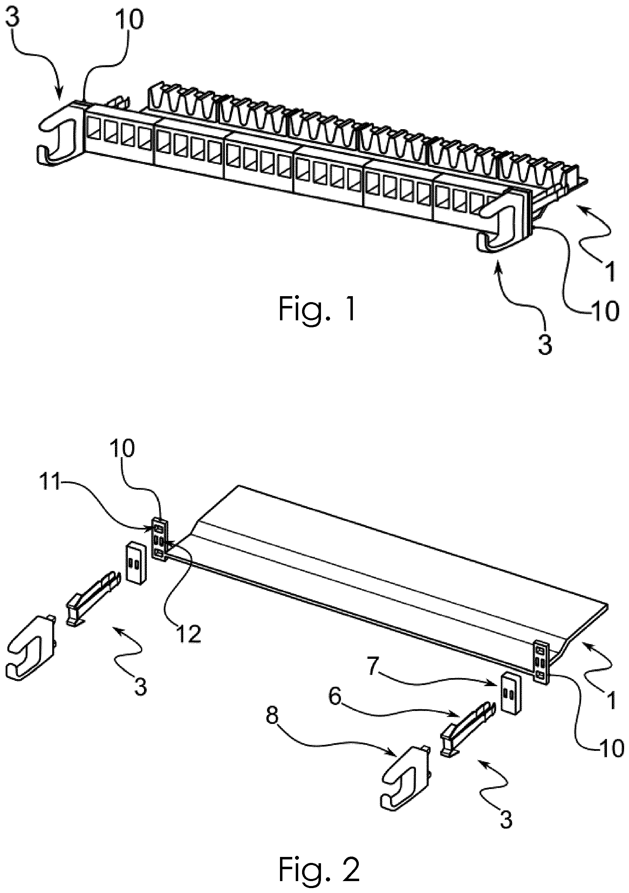

Un exemple de panneau de brassage téléphonique ou réseau est représenté sur la figure 1, montrant notamment en façade une succession de fiches femelles, destinées en façade à recevoir des fiches mâles complémentaires, tandis qu'en face arrière les fiches femelles sont reliées à des câblages adaptés, notamment de connexion à un réseau de télécommunication.

Plus précisément, ledit panneau°1 est dimensionné complémentairement à la structure de la baie, en particulier aux distances entre les montants°2 verticaux. En outre, le panneau°1 comprend en façade, à chaque extrémité latérale, une patte°10 de fixation pourvue de trous°11 traversants, similaires aux orifices°20 des montants°2 de la structure de la baie de brassage, au sein de laquelle ledit panneau°1 doit être rapporté en fixation.

Un exemple de pattes°10 d'un panneau°1 est visible sur la figure 2, montrant notamment deux trous°1 1 séparés verticalement par deux ouvertures°12 contiguës sur la largeur de ladite patte°10.

Les trous°11 et les orifices°20 permettent donc de recevoir des moyens assurant la fixation de chaque extrémité d'un panneau°1 sur au moins les deux montants°2 verticaux de la façade d'une baie de brassage.

Ainsi, l'invention vise un dispositif°3 de fixation de panneau°1 pour baie de brassage.

On notera qu'un seul dispositif°3 prévoit la fixation de chaque patte°10 d'un panneau°1. Par conséquent, la fixation d'un panneau°1 nécessite deux dispositifs°3, assurant la fixation de chacune de ses deux pattes°10.

Avantageusement, un tel dispositif°3 de fixation prévoit un caractère amovible de la fixation dudit panneau°1, à savoir qu'il est possible d'insérer et d'extraire simplement et rapidement ledit panneau°1, voire de le déployer partiellement (*i*.*e*. sans effectuer de montage et/ou démontage nécessitant un outil, par exemple pour le vissage et/ou dévissage).

Pour ce faire, tout d'abord, ledit dispositif 3 de fixation comprend un corps°4. Ce corps°4 peut être en tout type de matériau, préférentiellement en matériau plastique ou composite, voire métallique.

De plus, ledit corps°4 est pourvu en face arrière°40 de moyens de fixation prévu amovible. Lesdits moyens de fixation comprennent deux crochets°5, conformés et dimensionnés complémentairement pour coopérer en insertion et en extraction au sein des trous°1 1 traversants ménagés au sein dudit panneau°1, en particulier d'une de ses pattes°10 de fixation, ainsi que pour traverser des orifices°20 ménagés au travers d'un montant°2 vertical d'une structure de ladite baie de brassage. En d'autres termes, chacun desdits crochets°5 comprend des dimensions qui autorisent son passage au travers d'un trou°1 1 et aussi d'un orifice°20.

On notera que, pour permettre l'insertion des crochets°5, il est nécessaire d'aligner les trous°11 de chaque patte°10 en vis-à-vis des orifices°20 de chaque montant°2, pour assurer le libre passage desdits crochets°5.

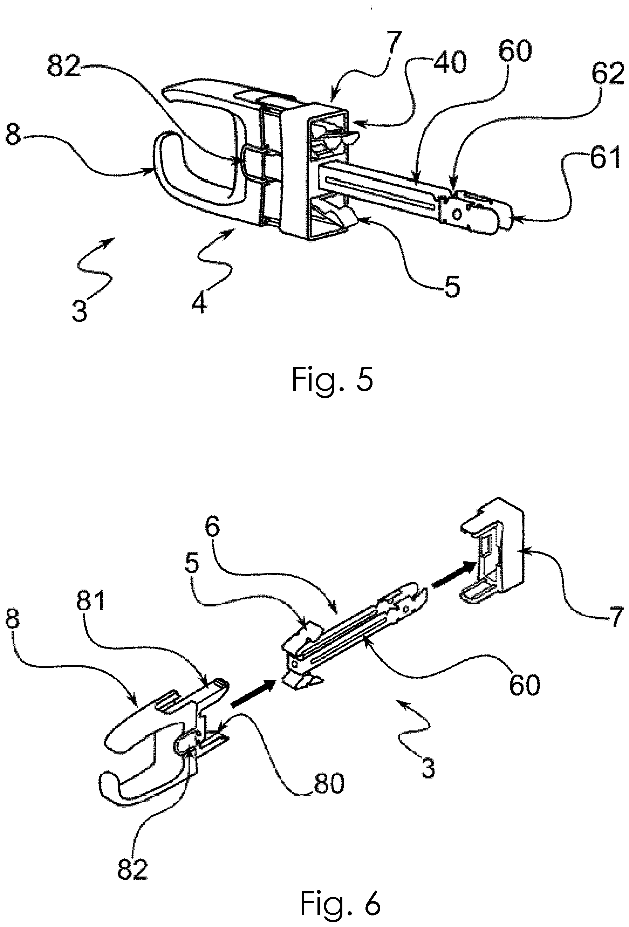

En outre, comme visible sur le mode de réalisation de la figure 5, les deux crochets°5 sont disposés verticalement, l'un au-dessus de l'autre. Un des crochets°5 supérieur vient alors coopérer avec un premier orifice°20, tandis que l'autre des crochets°5 inférieur vient coopérer avec un second orifice°20 situé inférieurement et espacé verticalement d'un orifice°20 intermédiaire par rapport audit orifice°20 supérieur.

Une fois insérés, lesdits crochets°5 d'un dispositif°3 de fixation assurent la fixation de la patte°10 sur laquelle ledit dispositif°3, et de fait le panneau°1, est rapporté sur le montant°2.

Plus avant, lesdits crochets°5 sont montés mobiles depuis une position écartée vers une position rapprochée, et inversement. De surcroît, en fonction de la position, lesdits crochets°5 verrouillent ou non le dispositif°3, et de fait le panneau°1, par rapport audit montant°2, à savoir :
i) en position rapprochée, lesdits crochets°5 assurent le maintien en fixation dudit panneau°1 sur ledit montant vertical°2 de ladite baie de brassage ;
ii) en position écartée, lesdits crochets°5 assurent l'insertion et l'extraction dudit dispositif°3 par rapport au montant°2 vertical.

En somme, l'écartement des crochets°5 s'effectue selon une course depuis la position rapprochée vers la position écartée, qui permet de maintenir le dispositif°3 avec le panneau°1 en accrochage sur le montant°2 jusqu'à désolidariser le dispositif°3 du montant°2 permettant d'extraire l'ensemble panneau°1 et dispositif°3 par rapport audit montant°2.

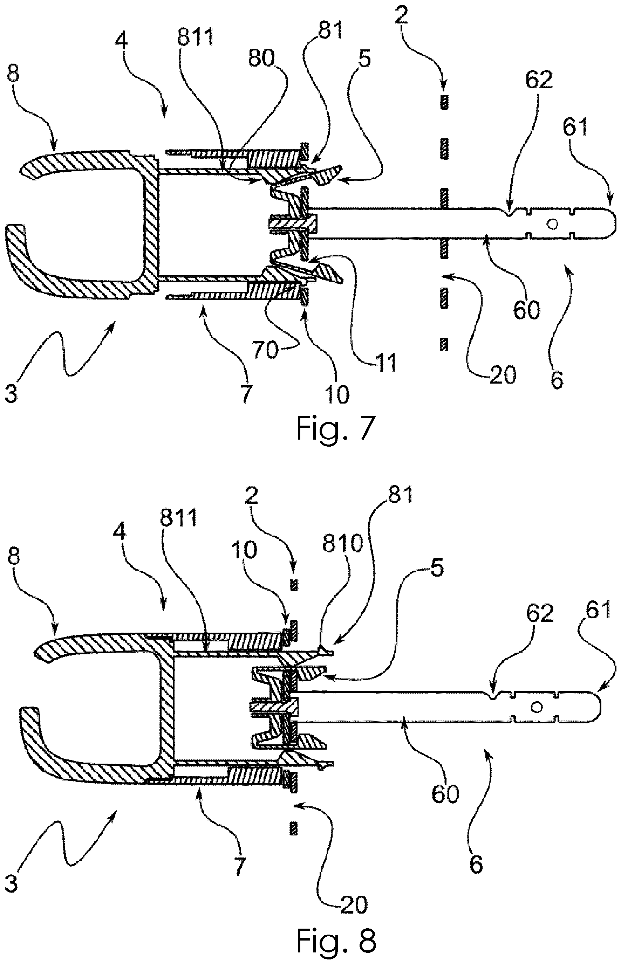

La figure 7 montre un mode de réalisation du dispositif°3 avec les crochets°5 en position écartée, permettant de traverser librement, les trous°11 de la patte°10 du panneau°1 et les orifices°20 du montant°2. La figure 8 montre les crochets°5 en position rapprochée, assurant le maintien et le verrouillage dudit dispositif°3, et de fait du panneau°1, sur ledit montant°2.

Selon un autre mode de réalisation, inversement :
i) en position écartée, lesdits crochets°5 assurent le maintien en fixation dudit panneau°1 sur ledit montant vertical°2 ;
ii) en position rapprochée, lesdits crochets°5 assurent l'insertion et l'extraction dudit dispositif°3 par rapport audit montant°2 vertical.

De façon similaire, c'est alors le rapprochement des crochets°5 qui s'effectue selon une course depuis la position écartée vers la position rapprochée, qui autorise l'accrochage jusqu'à la désolidarisation, tout en permettant l'extraction de l'ensemble.

De façon connexe, le retour desdits crochets°5 depuis la position rapprochée vers la position écartée (ou réciproquement inversement) peut s'effectuer par des moyens de rappel élastique. De tels moyens de rappel élastique peuvent être de tout type, comme un organe ajouté, ou bien la forme et la résilience du matériau utilisé par fabriquer lesdits crochets°5.

Avantageusement, l'invention prévoit que lesdits moyens de fixation comprennent des moyens°6 de retenue pourvus d'au moins une languette°60, préférentiellement deux languettes°60.

En outre, ladite au moins une languette°60 peut être essentiellement contenue dans un plan horizontal ou un plan vertical, préférentiellement dans un plan vertical comme visible sur les figures.

De plus, ladite au moins une languette°60 est conformée et dimensionnée pour coopérer en coulissement au travers d'un desdits trous°1 1 et d'un desdits orifices°20. Selon le mode de réalisation préféré, les moyens de retenue°6 du dispositif°3 sont pourvus de deux languettes°60, chacun desdites languettes coopèrent alors en coulissement au sein de chacune des deux ouvertures°12 contiguës de la patte°10.

Plus avant, ladite au moins une languette°60 s'étend depuis la face°40 arrière du corps°4 jusqu'à une extrémité°61 distale pourvue d'au moins une encoche°62 formant butée contre ledit montant°2. En d'autres termes, une fois ladite languette°60 introduite au sein de l'orifice°20 du montant°2, lors d'une extraction partielle du panneau°1, ladite encoche°62 de la languette°60 coopère contre l'arrière du montant°2, notamment en appui autour d'au moins un des bords dudit orifice°20, préférentiellement en emboîtement avec le chant dudit bord dudit orifice°20.

Selon un mode de réalisation, comme visible sur la figure 3, ladite encoche°62 forme butée contre la face intérieure dudit montant°2 vertical, dans une position inclinée dudit dispositif°3, et de fait dudit panneau°1 dont il est solidaire. En somme, l'encoche°62 est ménagée le long de ladite languette°60, à une distance de l'extrémité°61 distale, assurant qu'une fois inclinée, l'encoche°62 vient coopérer contre la face arrière du montant°2, préférentiellement le chant du bord dudit orifice°20, la longueur restante présentant une longueur suffisante pour que la languette°60 ne s'extrait pas dudit orifice°20.

En outre, le maintien incliné en extraction partielle du panneau°1, avec l'encoche°62 coopérant contre le montant°2, peut s'effectuer uniquement sous l'effet de la gravité, simplement sous l'effet de son propre poids.

Selon un mode de réalisation, lesdits moyens°6 de retenue comprennent deux languettes°60 parallèles, ou bien sensiblement parallèles entre elles.

Préférentiellement, lesdites deux languettes°60 sont légèrement divergentes vers l'extrémité°61 distale. De plus, lesdites deux languettes°60 sont légèrement résilientes, autorisant le rapprochement par pincement, avec un retour élastique en position initiale écartée. Un tel rapprochement des deux languettes°60 autorise leur introduction au sein de l'orifice°20, tandis que le retour en écartement exerce une légère tension, limitant le glissement en extraction.

Selon un mode de réalisation, ledit corps°4 comprend une base°7 et des moyens°8 de préhension rapportés mobiles en coulissement sur ladite base°7, depuis une position repliée vers une position déployée, et inversement.

De plus, lesdits moyens°8 de préhension coopèrent avec lesdits moyens de fixation pour l'actionnement manuel de la mobilité des crochets°5 depuis la position rapprochée vers la position écartée.

Réciproquement, selon le mode de réalisation correspondant, inversé, lesdits moyens°8 de préhension coopèrent avec lesdits moyens de fixation pour l'actionnement manuel de la mobilité des crochets°5 depuis la position écartée vers la position rapprochée.

En somme, la base°7 et les moyens°8 de préhension sont deux parties indépendantes, emboîtées ensemble avec une liberté de mouvement desdits moyens°8 de préhension selon une translation par rapport à ladite base°7.

En particulier, ladite base°7 vient se positionner contre la patte°10 en face avant du panneau°1, alors les moyens°8 de préhension viennent au-devant de ladite base°7. De plus, lesdits moyens°8 de préhension peuvent coulisser vers l'avant pour passer de la position repliée vers la position déployée, et inversement. Ladite base°7 sert donc de socle de glissement aux moyens°8 de préhension. Un tel déplacement est prévu manuel, sous l'action d'une personne, venant agripper et tirer vers l'avant les moyens°8 de préhension, ou inversement les repousser vers l'arrière.

Plus précisément, en position repliée, les moyens°8 de préhension induisent le verrouillage des crochets°5 en position rapprochée, assurant le maintien en fixation du dispositif°3, et de fait du panneau°1, au travers des orifices°20 sur le montant°2. A l'inverse, en position déployée, les moyens°8 de préhension libèrent les crochets°5, revenant automatiquement en position écartée (ou réciproquement rapprochée) sous l'effet des moyens de rappel élastique, et le panneau°1 peut être extrait par rapport audit montant°2.

A cet effet, selon un mode de réalisation, lesdits moyens°8 de préhension comprennent des moyens°80 de verrouillage orientés vers ladite face°40 arrière du corps°4. De plus, selon la position repliée ou déployée des moyens°8 de préhension, lesdits moyens°80 de verrouillage coopèrent avec les crochets°5, à savoir :
j) en position repliée, lesdits moyens 80 de verrouillage assurent par appui le blocage desdits crochets 5 en position rapprochée (ou réciproquement en position écartée), pour le maintien en fixation dudit panneau°1 sur ledit montant°2 vertical ;
jj) en position déployée, lesdits moyens°80 de verrouillage assurent par appui partiel le blocage desdits crochets°5 en position intermédiaire, pour l'insertion et l'extraction dudit panneau°1 par rapport audit montant°2 vertical, tout en maintenant ledit panneau°1 solidaire dudit dispositif°3.

En somme, en tirant sur les moyens°8 de préhension vers la position déployée, on libère les moyens°80 de verrouillage, qui n'appuie plus sur les crochets°5 qui peuvent s'écarter (ou réciproquement se rapprocher) et ainsi se retrouver en position intermédiaire autorisant leur libre passage au travers des orifices°20 du montant°2.

En sens inverse, en repoussant lesdits moyens°8 de préhension vers la position repliée, les moyens°80 de verrouillage reviennent en appui contre les crochets°5 et les repoussent vers leur position rapprochée (ou réciproquement écartée), opérant l'accrochage du panneau°1 au travers des orifices°20 dudit montant°2.

Selon un mode de réalisation, lesdits moyens°80 de verrouillage comprennent des moyens°81 d'arrêt desdits moyens°8 de préhension sur ladite base°7. Lesdits moyens°81 d'arrêt servent à limiter la course des moyens°8 de préhension en position déployée.

De tels moyens°81 d'arrêt peuvent être de tout type, notamment sous la forme de redents°810 ou ergots saillants, venant coopérer en butée contre une paroi°70 interne de ladite base°7. En outre, lesdits moyens°81 d'arrêt peuvent être prévus élastiques, autorisant leur passage au niveau de ladite paroi°70 interne lors de l'insertion en coulissement des moyens°8 de préhension au sein de la base°7. Ensuite, le rappel élastique maintient lesdits moyens°81 d'arrêt en une position telle qu'ils viennent en appui contre ladite paroi°70 interne de la base°7 lors du coulissement depuis la position repliée vers la position déployée desdits moyens°8 de préhension. Cette coopération fonctionne alors comme un clipsage, même si les moyens°8 de préhension conservent une liberté de mouvement en translation une fois engagés et « clipsés » au sein de ladite base°7.

Un exemple de moyens°81 d'arrêt est visible sur les figures 7 et 8, sous forme de deux tiges°811 saillantes vers l'arrière des moyens°8 de préhension, dont les extrémités distales sont pourvues des redents°810.

Selon un mode de réalisation, l'invention prévoit de verrouiller les moyens°8 de préhension sur ladite base°7, en position repliée de maintien en fixation du panneau°1 sur le montant°2. Pour ce faire, les moyens°8 de préhension comprennent latéralement des boutons°82 de déverrouillage par pression et traction desdits moyens°8 de préhension par rapport à ladite base°7. De plus, lesdits boutons°82 comprennent des ergots°820 coopérant en encliquetage avec des réceptacles°71 ménagés au sein de ladite base°7 de façon complémentaire.

Selon le mode de réalisation préféré, représenté sur les figures 4 à 6, les moyens°8 de préhension comprennent deux boutons°82, situés symétriquement, de part et d'autre, sur chaque face latérale.

Ainsi, par simple pression, les boutons°82 permettent de désenclencher l'encliquetage des ergots°820 par rapport aux réceptacles°71, autorisant alors le libre coulissement des moyens°8 de préhension par rapport à la base°7, jusqu'à venir être bloqués dans leur course par les moyens°81 d'arrêt. Ce désenclenchement permet de passer de la position de verrouillage des crochets°5 rapprochés (ou réciproquement écartés) en position repliée des moyens°8 de préhension, vers la position écartée (ou réciproquement rapprochée) en position déployée desdits moyens°8 de préhension.

En sens inverse, les ergots°820 des boutons°82 viennent s'encliqueter après le passage des parois avant des réceptacles°71, de préférence autorisé par déformation du fait de la résilience et l'élasticité des matériaux employés.

Selon un mode de réalisation, ladite au moins une languette°60 est amovible, rapportée en insertion au travers de ladite base°7. De plus, ladite languette°60 est maintenue en insertion, par tout type de moyens.

Selon un mode de réalisation, ladite languette°60 est introduite par l'avant au travers de ladite base°7, puis maintenue en insertion par lesdits moyens°8 de préhension une fois montés sur ladite base°7, à savoir coulissés au moins en position déployée.

Selon un mode préféré de réalisation, ladite languette°60 est solidarisé par vissage sur ladite base°7, notamment depuis l'arrière en traversant ladite patte°10 du panneau°1.

Selon un mode de réalisation complémentaire, la base°7 comprend intérieurement des moyens adaptés pour autoriser l'insertion de la languette°60 et son maintien une fois insérée, notamment par clipsage ou encliquetage.

Selon un mode de réalisation, ladite au moins une languette°60 est solidaire desdits crochets°5, à savoir que les crochets°5 peuvent être rapportés en fixation sur la languette°60, ou bien préférentiellement en faire partie intégrante au travers d'une seule et même pièce, comme visible notamment sur la figure 6.

A ce titre, ladite pièce pourvue de deux languettes°60 parallèles entre elles, avec lesdits crochets°5, peut être en tout type de matériau, préférentiellement en métal. En outre, l'épaisseur du matériau assure la résilience de l'une ou l'autre des parties de cette pièce.

Selon un mode de réalisation, ladite base°7 est rapportée en fixation sur la patte°10 du panneau°1, notamment par vissage, de préférence par vissage avec ladite languette°60. La base°7 sert alors de socle à l'intérieur duquel vont être introduits lesdits moyens°6 de retenue, à savoir ladite au moins une languette°60, puis ladite base°7 est refermée par lesdits moyens°8 de préhension, coulissant jusqu'à clipsage des moyens°81 d'arrêt.

Une fois ce montage préalable effectué sur chacune des deux pattes°10 du panneau°1, il est monté sur les montants°2 de la baie de brassage. En premier lieu, de chaque côté, ladite au moins une languette°60 est enfichée dans un orifice°20 médian correspondant, puis coulisse jusqu'à ce que les crochets°5 viennent pénétrer les orifices°20 situés au-dessus et en dessous dudit orifice intermédiaire, puis assurer le maintien par poussée des moyens°8 de préhension et appui des moyens°80 de verrouillage contre lesdits crochets°5.

L'invention concerne aussi un panneau°1 pour baie de brassage, comprenant en façade, à chaque extrémité, une patte°10 de fixation.

De plus, ladite patte°10 de fixation comprend des évidements, à savoir :
k) deux trous°1 1 traversants espacés verticalement ;
kk) au moins une ouverture°12 située entre lesdits deux trous°1 1.

Plus avant, ledit panneau°1 est équipé, à chaque extrémité, d'un dispositif°3 de fixation amovible, tel que précédemment décrit.

Ainsi, lesdits crochets°5 des moyens de fixation traversants lesdits trous°11, tandis que ladite au moins une languette°60 des moyens°6 de retenue traverse ladite au moins une ouverfure°12.

Selon le mode de réalisation préféré, le dispositif°3 comprend deux languettes°60. Dès lors, ladite patte°10 de fixation comprend deux ouvertures°12 contiguës sur la largeur de ladite patte°10, lesdites deux ouvertures°12 étant conformées verticalement et complémentairement pour autoriser le libre passage desdites languettes°60.

Une telle configuration de la patte°10 avec deux trous°1 1 et deux ouvertures°12 est notamment visible sur la figure 2.

L'invention concerne encore une baie de brassage, comprenant une structure pourvue en façade d'au moins deux montants°2 verticaux, lesdits montants°2 comprenant plusieurs orifices°20 répartis régulièrement le long de la hauteur desdits montants°2.

De surcroît, ladite baie comprend, rapporté en fixation amovible, au moins un panneau°1 susmentionné, à savoir équipé à chaque patte°10 d'un dispositif°3 de fixation amovible, dont les composants coopèrent en emboîtement et fixation avec les orifices°20 de chacun desdits deux montants°2.

## Revendications

1. Dispositif (3) de fixation amovible de panneau pour baie de brassage, comprenant
- un corps (4) pourvu en face (40) arrière de moyens de fixation prévue amovible ;
- lesdits moyens de fixation comprenant deux crochets (5), lesdits crochets (5) étant conformés et dimensionnés complémentairement pour coopérer en insertion et en extraction au sein de trous (11) traversants ménagés au sein dudit panneau (1) et d'orifices (20) ménagés au travers d'un montant (2) vertical d'une structure de ladite baie de brassage ;
- lesdits crochets (5) étant montés mobiles depuis une position écartée vers une position rapprochée, et inversement ;
i) en position rapprochée, ou en position écartée, lesdits crochets (5) assurent le maintien en fixation dudit panneau (1) sur ledit montant (2) vertical de ladite baie de brassage ;
ii) tandis qu'en position écartée, ou réciproquement en position rapprochée, lesdits crochets (5) assurent l'insertion et l'extraction dudit dispositif (3) par rapport audit montant (2) vertical, **caractérisé en ce que**
iii) le retour depuis la position rapprochée vers la position écartée, ou réciproquement inversement, s'effectuant par des moyens de rappel élastique ;
lesdits moyens de fixation comprennent
- des moyens (6) de retenue pourvus d'au moins une languette (60), s'étendant depuis la face (40) arrière jusqu'à une extrémité (61) distale pourvue d'au moins une encoche (62) formant butée contre ledit montant (2) vertical;
- ladite languette (60) étant conformée et dimensionnée pour coopérer en coulissement au travers d'un desdits trous (11) et d'un desdits orifices (20).

2. Dispositif (3) de fixation selon la revendication précédente, **caractérisé en ce que** lesdits moyens (6) de retenue comprennent deux languettes (60) parallèles.

3. Dispositif (3) de fixation selon l'une quelconque des revendications précédentes, **caractérisé en ce que**
- ledit corps (4) comprend une base (7) et des moyens (8) de préhension rapportés mobiles en coulissement sur ladite base (7), depuis une position repliée vers une position déployée, et inversement ;
- lesdits moyens (8) de préhension coopérant avec lesdits moyens de fixation pour l'actionnement manuel de la mobilité des crochets (5) depuis la position rapprochée, ou réciproquement la position écartée, vers la position écartée, ou réciproquement la position rapprochée.

4. Dispositif (3) de fixation selon la revendication précédente, **caractérisé en ce que**
- lesdits moyens (8) de préhension comprenant des moyens (80) de verrouillage orientés vers ladite face (40) arrière ;
j) en position repliée, lesdits moyens (80) de verrouillage assurent par appui le blocage desdits crochets (5) en position rapprochée, ou réciproquement rapprochée, pour le maintien en fixation dudit panneau (1) sur ledit montant (2) vertical;
jj) en position déployée, lesdits moyens (80) de verrouillage autorisent le retour des crochets (5) vers la position écartée (ou réciproquement rapprochée), pour l'insertion et l'extraction dudit panneau (1) par rapport au montant (2) vertical de ladite baie de brassage.

5. Dispositif (3) de fixation selon la revendication précédente, **caractérisé en ce que** lesdits moyens (80) de verrouillage comprennent des moyens (81) d'arrêt par clipsage desdits moyens (81) de préhension en position déployée sur ladite base (7).

6. Dispositif (3) de fixation selon l'une quelconque des revendications 3 à 5, **caractérisé en ce que**
- les moyens (8) de préhension comprennent latéralement des boutons (82) de déverrouillage par pression et traction desdits moyens (8) de préhension par rapport à ladite base (7);
- lesdits boutons (82) comprenant des ergots (820) coopérant en encliquetage avec des réceptacles (71) ménagés au sein de ladite base (7) de façon complémentaire.

7. Dispositif (3) de fixation selon l'une quelconque des revendications 3 à 6, **caractérisé en ce que** ladite au moins une languette (60) est amovible, rapportée en insertion au travers de ladite base (7).

8. Dispositif (3) de fixation selon l'une quelconque des revendications, **caractérisé en ce que** ladite au moins une languette (60) est solidaire desdits crochets (5).

9. Panneau (1) pour baie de brassage, comprenant
- en façade, à chaque extrémité, une patte (10) de fixation ;
- ladite patte (10) de fixation comprenant k) deux trous (11) traversants espacés verticalement ; kk) au moins une ouverture (12) située entre lesdits deux trous (11)); ledit panneau (1) étant équipé, à chaque extrémité, d'un dispositif (3) de fixation amovible selon l'une quelconque des revendications précédentes ;
- lesdits crochets (5) des moyens de fixation traversants lesdits trous (11)
- ladite au moins une languette (60) des moyens (6) de retenue traversant ladite au moins une ouverture (12).

10. Panneau (1) selon la revendication précédente, **caractérisé en ce que** ladite patte (10) de fixation comprend deux ouvertures (12) contiguës sur la largeur de ladite patte (10), lesdites deux ouvertures (12) étant conformées verticalement et complémentairement pour autoriser le libre passage desdites deux languettes (60) du dispositif (3) selon la revendication 2.

11. Baie de brassage, comprenant
- une structure pourvue en façade d'au moins deux montants (2) verticaux, lesdits montants (2) comprenant plusieurs orifices (20) répartis régulièrement le long de la hauteur desdits montants (2);
- rapporté en fixation amovible, au moins un panneau (1) selon l'une quelconque des revendications 9 ou 10.

## Patentansprüche

1. Befestigungsvorrichtung (3) zum abnehmbaren Befestigen eines Panels für einen Netzwerkschrank, umfassend
- einen Körper (4), der auf einer Rückseite (40) mit Befestigungsmitteln versehen ist, der abnehmbar vorgesehen ist;
- die Befestigungsmittel umfassend zwei Haken (5), wobei die Haken (5) zum Zusammenwirken bei einem Einführen und einem Herausziehen innerhalb von Durchgangslöchern (11) komplementär angepasst und bemessen sind, die innerhalb des Panels (1) und von Öffnungen (20) angeordnet sind, die durch einen Vertikalständer (2) einer Struktur des Netzwerkschranks angeordnet sind;
- wobei die Haken (5) von einer beabstandeten Position in eine angenäherte Position und umgekehrt bewegbar montiert sind;
i) in der angenäherten Position (oder in der beabstandeten Position) die Haken (5) das Festhalten des Panels (1) an dem Vertikalständer (2) des Netzwerkschranks sicherstellen;
ii) während in der beabstandeten Position (oder wechselseitig in der angenäherten Position), die Haken (5) das Einführen und das Herausziehen der Vorrichtung (3) relativ zu dem Vertikalständer (2) sicherstellen,
iii) die Rückkehr von der angenäherten Position in die beabstandete Position (oder wechselseitig umgekehrt) durch elastische Rückstellmittel erfolgt;
**dadurch gekennzeichnet, dass**
wobei die Befestigungsmittel umfassen
- Zurückhaltemittel (6), die mit mindestens einer Zunge (60) versehen sind, die sich von der Rückseite (40) bis zu einem distalen Ende (61) erstreckt, die mit mindestens einer Kerbe (62) versehen ist, die einen Anschlag gegen den Vertikalständer (2) ausbildet;
- wobei die Zunge (60) zum Zusammenwirken bei einem Gleiten durch eines der Löcher (11) und eine der Öffnungen (20) angepasst und bemessen ist.

2. Befestigungsvorrichtung (3) nach dem vorstehenden Anspruch,
**dadurch gekennzeichnet, dass** die Rückhaltemittel (6) zwei parallele Zungen (60) umfassen.

3. Befestigungsvorrichtung (3) nach einem der vorstehenden Ansprüche,
**dadurch gekennzeichnet, dass**
- der Körper (4) eine Basis (7) und Greifmittel (8) umfasst, die auf der Basis (7) von einer eingeklappten Position in eine ausgeklappte Position und umgekehrt gleitbewegbar angebracht sind;
- die Greifmittel (8) mit den Befestigungsmitteln zum manuellen Betätigen der Beweglichkeit der Haken (5) von der angenäherten Position oder
wechselseitig der beabstandeten Position in die beabstandete Position oder wechselseitig die angenäherte Position zusammenwirken.

4. Befestigungsvorrichtung (3) nach dem vorstehenden Anspruch,
**dadurch gekennzeichnet, dass**
- die Greifmittel (8) Verriegelungsmittel (80) umfassen, die in Richtung der Rückseite (40) ausgerichtet sind;
j) in der eingeklappten Position die Verriegelungsmittel (80) durch Drücken die Blockierung der Haken (5) in der angenäherten (oder wechselseitig angenäherten) Position für das Festhalten des Panels (1) an dem Vertikalständer (2) sicherstellen;
jj) in der ausgeklappten Position die Verriegelungsmittel (80) die Rückkehr der Haken (5) in die beabstandete (oder wechselseitig angenäherte) Position zum Einführen und zum Herausziehen des Panels (1) relativ zu dem Vertikalständer (2) des Netzwerkschranks zulassen.

5. Befestigungsvorrichtung (3) nach dem vorstehenden Anspruch,
**dadurch gekennzeichnet, dass** die Verriegelungsmittel (80) Mittel (81) zum Arretieren durch Einklinken der Greifmittel (8) in der ausgeklappten Position auf der Basis (7) umfassen.

6. Befestigungsvorrichtung (3) nach einem der Ansprüche 3 bis 5,
**dadurch gekennzeichnet, dass**
- die Greifmittel (8) Knöpfe (82) zum Entriegeln durch Druck und Zug der Greifmittel (8) relativ zu der Basis (7) seitlich umfassen;
- die Knöpfe (82) Nocken (820) umfassen, die bei einem Einrasten mit Aufnahmen (71) zusammenwirken, die innerhalb der Basis (7) komplementär angeordnet sind.

7. Befestigungsvorrichtung (3) nach einem der Ansprüche 3 bis 6,
**dadurch gekennzeichnet, dass** die mindestens eine Zunge (60) abnehmbar ist, die bei Einführen durch die Basis (7) angebracht wird.

8. Befestigungsvorrichtung (3) nach einem der Ansprüche,
**dadurch gekennzeichnet, dass** die mindestens eine Zunge (60) mit den Haken (5) fest verbunden ist.

9. Panel (1) für den Netzwerkschrank, umfassend
- auf der Vorderseite an jedem Ende eine Befestigungslasche (10);
- die Befestigungslasche (10) umfassend
k) zwei vertikal auseinanderliegende Löcher (11);
kk) mindestens eine Öffnung (12), die sich zwischen den zwei Löchern (11) befindet;
wobei das Panel (1) an jedem Ende mit einer abnehmbaren Befestigungsvorrichtung (3) nach einem der vorstehenden Ansprüche ausgestattet ist;
- wobei die Haken (5) der Befestigungsmittel durch die Löcher (11) verlaufen;
- wobei die mindestens eine Zunge (60) der Rückhaltemittel (6) durch die mindestens eine Öffnung (12) verläuft.

10. Panel (1) nach dem vorstehenden Anspruch,
**dadurch gekennzeichnet, dass** die Befestigungslasche (10) zwei Öffnungen (12) umfasst, die über die Breite der Lasche (10) aneinander angrenzen, wobei die zwei Öffnungen (12) zum Zulassen des freien Durchgangs der zwei Laschen (60) der Vorrichtung (3) nach Anspruch 2 vertikal und komplementär angepasst sind.

11. Netzwerkschrank, umfassend
- eine Struktur, die an der Vorderseite mit mindestens zwei Vertikalständern (2) versehen ist, die Ständer (2) umfassend mehrere Öffnungen (20), die über die Höhe der Ständer (2) regelmäßig verteilt sind;
- mindestens ein Panel (1) nach einem der Ansprüche 9 oder 10, das in abnehmbarer Befestigung angebracht ist.

## Claims

1. A removable fastening device (3) for a panel for a patch bay, comprising
- a body (4) provided on its rear face (40) with fastening means which are intended to be removable;
- said fastening means comprising two hooks (5), said hooks (5) being shaped and dimensioned in a complementary fashion to engage by insertion and extraction with through-holes (11) provided within said panel (1) and orifices (20) provided through a vertical upright (2) of a structure of said patch bay;
- said hooks (5) being mounted so as to be movable from a spread-apart position to a close-together position, and vice versa;
i) in the close-together position (or in the spread-apart position), said hooks (5) hold said panel (1) fastened to said vertical upright (2) of said patch bay;
ii) while in the spread-apart position (or conversely in the close-together position), said hooks (5) ensure the insertion and extraction of said device (3) with respect to said vertical upright (2);
iii) the return from the close-together position to the spread-apart position, or vice versa, is performed by resilient return means; **characterized in that**
said fastening means comprise
- retaining means (6) provided with at least one tongue (60), extending from the rear face (40) to a distal end (61), provided with at least one notch (62) forming a stop against said vertical upright (2);
- said tongue (60) being shaped and dimensioned to engage by sliding through one of said holes (11) and one of said orifices (20).

2. The fastening device (3) according to the preceding claim, **characterized in that** said retaining means (6) comprise two parallel tongues (60).

3. The fastening device (3) according to any one of the preceding claims, **characterized in that**
- said body (4) comprises a base (7) and gripping means (8) attached so as to be movable by sliding on said base (7) from a retracted position to a deployed position, and vice versa;
- said gripping means (8) cooperating with said fastening means for manually actuating the mobility of the hooks (5) from the close-together position, or conversely the spread-apart position, to the spread-apart position, or conversely the close-together position.

4. The fastening device (3) according to the preceding claim, **characterized in that**
- said gripping means (8) comprising locking means (80) oriented towards said rear face (40);
j) in the folded position, said locking means (80) lock, by pressure, said hooks (5) in the close-together position, or conversely in the close-together position, to hold said panel (1) fastened to said vertical upright (2);
jj) in the deployed position, said locking means (80) allow the hooks (5) to return to the spread-apart position (or conversely the close-together position), for insertion and extraction of said panel (1) with respect to the vertical upright (2) of said patch bay.

5. The fastening device (3) according to the preceding claim, **characterized in that** said locking means (80) comprise means (81) for keeping said gripping means (8) in the deployed position on said base (7) by clipping.

6. The fastening device (3) according to any one of claims 3 to 5, **characterized in that**
- the gripping means (8) laterally comprise buttons (82) for releasing said gripping means (8), by pressing and pulling, relative to said base (7);
- said buttons (82) comprising lugs (820) cooperating in snap-fit fashion with receptacles (71) provided within said base (7) in a complementary manner.

7. The fastening device (3) according to any one of claims 3 to 6, **characterized in that** said at least one tongue (60) is removable, inserted through said base (7).

8. The fastening device (3) according to any one of the claims, **characterized in that** said at least one tongue (60) is rigidly connected to said hooks (5).

9. A panel (1) for a patch bay, comprising
- on the front, at each end, a fastening bracket (10);
- said fastening bracket (10) comprising
k) two vertically spaced through-holes (11);
kk) at least one opening (12) located between said two holes (11);
said panel (1) being equipped, at each end, with a removable fastening device (3) according to any one of the preceding claims;
- said hooks (5) of the fastening means passing through said holes (11);
- said at least one tongue (60) of the retaining means (6) passing through said at least one opening (12).

10. The panel (1) according to the preceding claim, **characterized in that** said fastening bracket (10) comprises two contiguous openings (12) across the width of said bracket (10), said two openings (12) being shaped vertically and in a complementary manner to allow said two tongues (60) of the device (3) according to claim 2 to pass freely.

11. A patch bay, comprising
- a structure provided at the front with at least two vertical uprights (2), said uprights (2) comprising multiple orifices (20) evenly distributed along the height of said uprights (2);
- removably fastened, at least one panel (1) according to any one of claims 9 or 10.
